# EUROPEAN PATENT SPECIFICATION

(11) **EP 1 927 293 B1**
(45) Date of publication and mention of the grant of the patent: **13.03.2013**
(21) Application number: 06125164.1
(22) Date of filing: 30.11.2006
(51) Int. Cl.: A23N 7/00

(54) **Economical steam peeling**
Wirtschaftliches Dampfschälen
Épluchage économique à vapeur

(43) Date of publication of application: 04.06.2008
(73) Proprietor: Odenberg Engineering Limited, Dublin 2 (IE)
(72) Inventor: Broderick, Michael, Co. Carlow (IE)
(74) Representative: Catesby, Olivia Joanne

(56) References cited:
- FR-A- 2 144 135
- GB-A- 2 020 544
- GB-A- 2 247 829
- US-A- 4 064 794
- US-A- 5 942 271

## Description

### BACKGROUND OF THE INVENTION

### Field of the invention

This invention relates to steam peeling. In particular, the invention is directed to the control of pressure and temperature conditions within a steam peeling vessel during a steam peeling operation for the purposes of optimization of resource utilization and optimized removal of peel from product.

### Description of the prior art

Steam peeling as adverted to in the present specification is in particular directed to a process in which a quantity of product from which peel is to be removed is loaded into a rotatable or static pressure vessel, which is then closed off against the external environment, other than for input and discharge of steam. Once the pressure vessel has been closed, steam is introduced into the vessel and charging with steam continues until such time as a pressure of typically several bars has been reached. This pressure is maintained for a defined steaming period, during which phase the steam is applied to the surface of the product within the pressure vessel and the surface temperature of the product is thereby raised. Charging of the pressure vessel with steam continues throughout the steam phase. The steam phase is terminated by a reduction in steam pressure. The time taken to reduce the pressure may vary from substantially instantaneous to up to e.g. 10 seconds or longer, depending on the design and layout of the vessel and pipework. Ranges of 3-10 seconds are widely used, but certain units discharge steam in a time of the order of 1 second. Thus, cessation of charging of the pressure vessel with steam is accompanied by substantially contemporaneous or simultaneous blowdown. This results in the peel at the surface of the product which has been raised to an elevated temperature during the steaming phase separating from the underlying substance of the product, by virtue of moisture present in the peel at that stage flashing into steam.

During the steaming phase, the pressure vessel may rotate so that product is, as it were, tumbled within the pressurized unit, and the surface to be peeled of each product unit undergoes a substantially uniform exposure to the steam at a selected pressure and temperature. In an alternative construction, a static or non-rotatable pressure vessel may be employed, with uniform treatment of each product unit being ensured by agitation of product using e.g. a rotating mixing paddle located within the vessel. In this way, transfer of heat to all product units is achieved to good effect. The reduction in pressure at the end of the peeling phase is suitably coordinated with a cessation of other aspects of product treatment (e.g. agitation) and opening of the lid or outlet of the pressure vessel for discharge of treated product. In a rotary system, discharge is accomplished by bringing the vessel into and through a discharge or inverted disposition of the pressure vessel. Rotation may be continuous throughout the discharge phase, suitably at a reduced speed compared with that effected during the steam phase. Subsequent treatment stages then achieve separation of the peel of the product from the individual product items by way of rotating drum and/or brushing operations. Accordingly, termination of the steam phase is marked by several substantially simultaneous events or actions, including closing of a steam supply valve, opening of a blowdown valve, opening of the vessel lid, and positioned cessation or slowdown of rotation in the case of a rotational embodiment.

The separation of the peel corresponds, for example in the case of potatoes, substantially to what happens during domestic boiling of potatoes but on a large scale and without significant actual cooking of the potatoes. However, in industrial scale peeling, it is important that the quantity of peel separated is minimized, for efficient use of product and minimization of wastage. It is also important that the product should not undergo excessive "cooking" in the region close to the product surface, which could have potentially disadvantageous effects for its subsequent use value. Thus it is an objective of an efficient steam peeling process to expose the product to steam and pressure for the minimum possible period to achieve good and effective/efficient peeling action, efficiency of peeling being identified by inter alia minimum loss of useful and usable product. While peeling may be carried out by exposing the product to relatively low steam pressure values, in this case the steam time becomes more extended and the level of peel loss may be higher.

While the basics of steam peeling are relatively straightforward, the detailed mechanisms applicable to large scale peeling are not fully understood or indeed fully studied. In particular, optimum pressure and temperature values immediately prior to the initiation of blow-down or pressure release in order to cause the peel to lift off the product to best effect are currently not known. It is however thought that satisfactory peel separation may occur even at quite a low value of pre-blowdown pressure/temperature, provided that the steam temperature remains at a suitable value and consequently also product temperature in the vicinity of the surface to be peeled attains and retains a certain minimum temperature value. It is thought that an appropriate surface temperature of the product to be peeled is crucial to successful peeling, with pressure being significant in regard to minimizing loss of useful product during the peeling operation, in other words ensuring that the extent of the product removed during peeling does not encroach too deeply into the usable flesh of the food product.

Also unknown is whether and to what extent the pressure applied to the exterior of the potato by the steam affects peeling. It is thought that the cell structure of the starches in, for example, a potato, may undergo a degree of compression because of this applied pressure, and that this compression may serve to enhance the degree of heat transfer. However, the degree to which the use of higher pressure is of significance in relation to the peeling action remains to be determined, as does whether any advantage gained by increased temperature is offset by the increased costs of higher pressure operation and the accompanying increase in use of steam.

In a typical steam peeling operation with steam charging throughout the steam phase, experiments have shown that even at the level of the skin of for example a potato, the surface (or near-surface) temperature of the product to be peeled lags significantly behind that of the steam prior to blow-down. A key question therefore is just when the steam supply can be terminated, without engendering any significant adverse affect on the temperature achieved at the peeling surface during the steam phase. In other words, how low can the steam temperature be at the cessation of the steam phase, while yet achieving a good quality of peeling action. Also relevant is the optimum temperature required at the peeling surface in order to enable effective peeling to take place, while also ensuring that as little of the product as possible is raised above the gelatinisation temperature in the particular case of potatoes.

GB-A-2 247 829 describes a steam peeling apparatus comprising a pressure vessel for accommodating product to be peeled, means for charging said pressure vessel with steam under pressure, and means for exhausting steam from said vessel, the pressure vessel being generally cylindrical, having a sealable opening at one end thereof and being mounted for rotation about an axis transverse to its longitudinal axis of symmetry, so that the pressure vessel passes through a substantially inverted disposition during rotation about said transverse axis, in which inverted disposition said opening is directed downwardly, and the apparatus also comprising control means for regulating the duration of the period during which the vessel is charged with steam, for initiating the exhaust of steam from the vessel following the period of charging with steam, and for driving the pressure vessel in rotation during a steam peeling cycle at a speed such that the vessel will complete a substantially integral number of rotations during the period of charying with steam.

FR-A-2 144 135 describes a procedure and a processing apparatus adapted to peel any fruit or any vegetable, whatever the consistency, by heating the product to certain temperature and instantaneous cooling of the heated superficial surface of the fruits or vegetables, which ensures that the skin of the product is removed.

US-4064 794 discloses a stream peeling process in which the steam charging action is controlled in order to obtain a desired surface temperature.

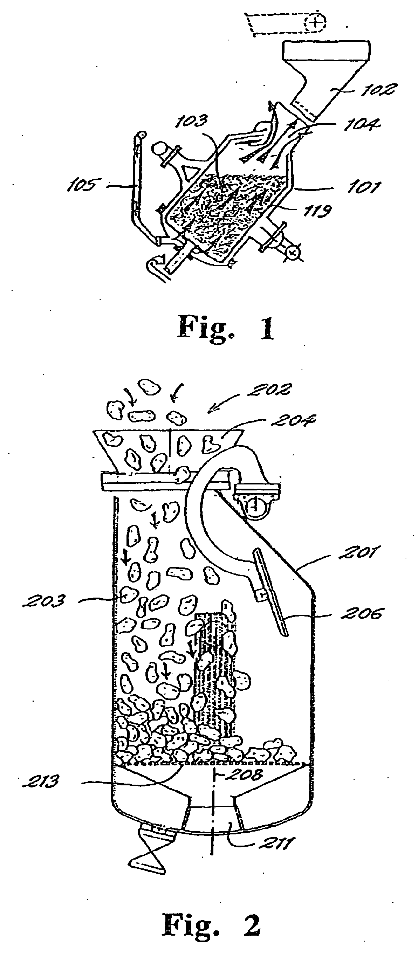

A first prior art steam peeler is shown in Fig. 1, in an initial product-loaded disposition, in which a generally cylindrical pressure vessel 101 is oriented with its axis at an oblique upward angle relative to the horizontal, for loading 102 of product 103 through the mouth 104 of the vessel 101 into an internal cage 119 rotatably mounted within vessel 101. Deaeration is then effected, the pressure vessel 101 1 is closed, and steam is blown in 105. The pressure vessel 101 is then rotated about an axis perpendicular to the plane of the paper into a disposition in which its axis of symmetry extends substantially horizontally and in the plane of the paper, at which stage the cage 119 is rotated within the vessel 101 about that axis of symmetry to effect the required peeling action while the vessel 101 remains charged with steam under pressure. The pressure within the vessel 101 is then relieved by rapid discharge of the steam, so that the peel is detached from the product, following which pivoting of the pressure vessel 101 about the axis perpendicular to the plane of the paper is again effected, to bring the mouth 104 of the vessel 101 into a downward disposition in which the axis of symmetry of the vessel 101 is oriented at an acute angle with respect to the horizontal, but below the horizontal as compared with the disposition shown in the drawing, at which stage the product 103 is discharged from the pressure vessel 101. The structure is technically complex, because of the diversity of pivoting and rotational movements required, together with the necessity to be able to admit and discharge steam under pressure at various different stages in the sequence of movements, as well as closing the vessel 101 and maintaining it in a sealed condition during the operational cycles.

In Fig. 2, a second form of rotatable steam peeling pressure vessel 201 is shown. In this arrangement, the vessel 201 is rotatable about an axis again perpendicular to the plane of the paper and is initially oriented in a disposition in which its axis of general symmetry 208 is disposed vertically upwards for product charging, 202 through mouth 204, as shown in the drawing. The loading and discharge opening 204 of the pressure vessel 201 is sealed by means of a door 206 which closes from the interior, thereby limiting the extent to which the pressure vessel 201 can be filled with product 203, in that the door 206 closing path of movement must be clear of product 203 during closing and opening movements. During steam peeling, rotation takes place by the pressure vessel 201 being turned about the axis perpendicular to the plane of the paper. By contrast with the arrangement of Fig. 1, rotation of the pressure vessel 201 is provided only about one axis, rather than the two degree of freedom arrangement provided by the structure of Fig. 1. There is no rotation about the axis of symmetry 208 of the pressure vessel 201. On completion of the pressurised steaming period, the vessel 201 is returned to the upright orientation shown in the drawing, pressure is released, and condensate may drain away at the base 211 of the pressure vessel 201 where the product is supported on a grid 213. When pressure is released, the door or inwardly opening lid 206 may also be opened, following which the pressure vessel 201 is inverted or substantially inverted for product 203 discharge. Disadvantages of the arrangement include the necessity for the pressure vessel 201 to be restored to an orientation in an upward direction for opening and closing of the door 206, while also the necessity to provide for drain of condensate arises out of a relatively slow reduction in pressure being applied in the system of Fig. 2, so that condensate forms within the pressure vessel 201, as compared with systems in which more rapid flash or high-speed exhaust of the pressurised steam is provided, where formation of condensate within the pressure vessel is substantially minimised.

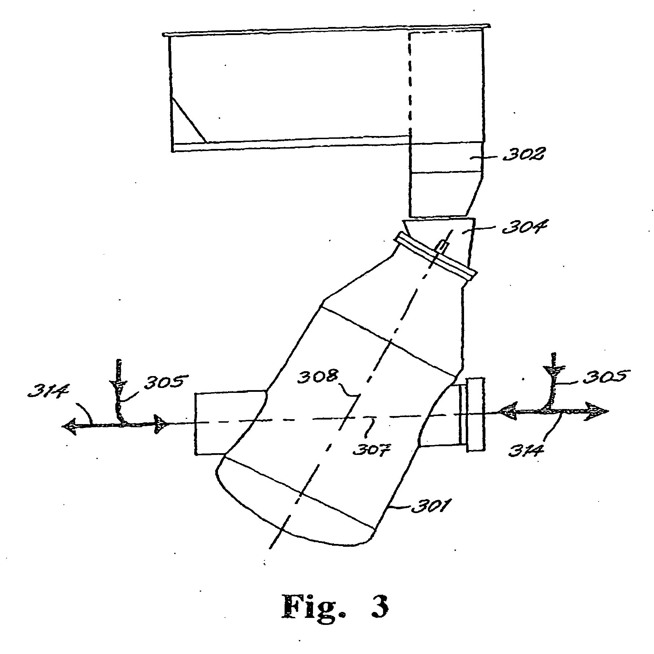

In the third prior art arrangement in which a rotating pressure vessel is used, as shown in Fig. 3, the pressure vessel 301 is mounted for rotation about a substantially horizontal axis 307 extending in the plane of the paper of the drawing. The pressure vessel 301 is however mounted on this axis 307 in a skewed or canted manner, so that its general axis of symmetry 308 at all times defines an acute angle with respect to the axis 307 of rotation. Charging 302 of the pressure vessel 301 takes place in the manner previously described with the opening 304 of the pressure vessel 301 being upwardly directed, and discharge takes place when the pressure vessel 301 is turned so that the opening 304 is directed downwardly. When the pressure vessel 301 is loaded and sealed by closure of the vessel door, it is charged 305 with steam and is rotated about the horizontal axis 307, but remains in its canted or skewed disposition with respect to this axis 307 at all times. Again in this structure, there is no rotation about the axis of symmetry 308. Because of the canted or skewed arrangement of the pressure vessel 301, the construction is required to tolerate and withstand substantial out-of-balance forces during rotation of the pressure vessel 301, thereby necessitating a particularly robust and heavy supporting structure. Feed of product to the pressure vessel is effected by means of a weighing conveyor and associated ducting or a hopper arrangement 302, as applies also to the prior art apparatus of Fig. 1 and may likewise be associated with the system of Fig. 2. Exhaust is effected as indicated by reference numerals 314.

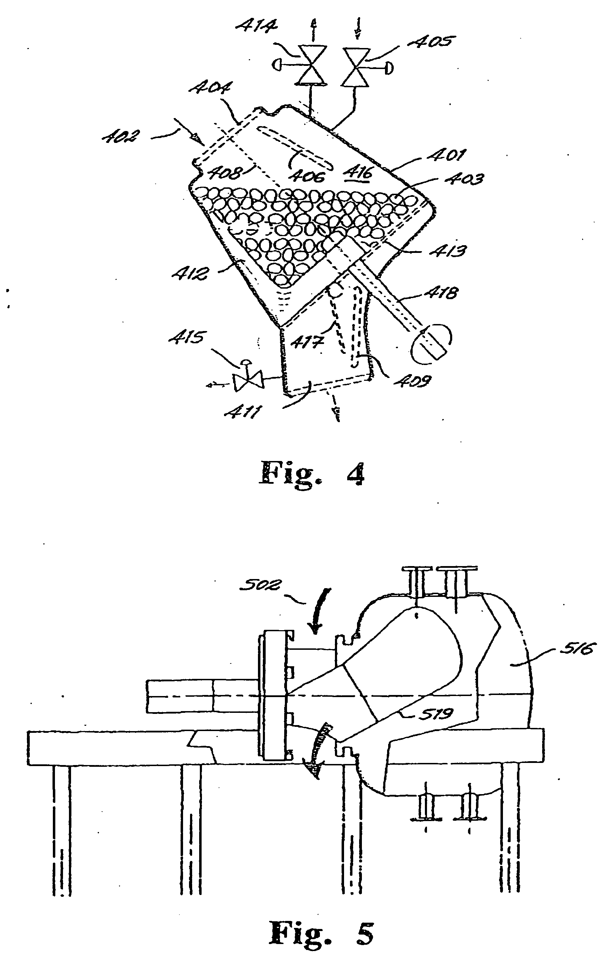

Fig. 4 shows a first prior art arrangement using a static pressure vessel 401 which is equipped with a product inlet door 406 at the top 404 and a product outlet door 409 at the bottom 411. Within the static pressure vessel 401, there is provided a continuously rotatable agitator 412 and a condensate-separating grid 413. Fixed connections provide for steam supply 405 and exhaust 414 and for condensate discharge 415, all substantially automatically controlled during operation of the system. After filling 402 and closure of the pressure vessel 401, product 403 to be peeled is held in the compartment 416 above the grid 413, while the agitator 412 keeps the product 403 moving, but without product damage. Separation of condensate, which forms in this system, is continuous throughout the steam exposure time, because of the rotational agitation which is effected about an axis 408 inclined relative to the horizontal. Condensate flows away through the grid 413 and is evacuated by way of a condensate valve 415. At the end of the steaming time, the steam outlet valve 414 is opened for pressure drop to atmospheric. Discharge of product 403 through a door 417 in the grid 413 and subsequently through the product outlet port 411 is then effected. There is downstream transfer of product 403 by auger to a brush and belt skin removal arrangement. The necessity for significant numbers of moving parts within the pressurised region, in particular three doors 406, 409 and 417, together with the need for pressure sealing of at least the drive 418 for the agitator 412 by way of a rotary joint or gland leads to a potentially significant maintenance requirement in a system of this kind, as well as high cost in construction.

A further peeling arrangement using a static pressure vessel is shown in Fig. 5, in which product is charged 502 to a basket 519 which is located within a pressurisable region or dome 516. The basket 519 is shown in Fig. 5 in a discharge or dump orientation and reference 502 indicates the direction of charging or loading when the mouth of the basket 519 is directed upwards. The dome 516 is then sealed and charged with steam, while the basket 519 containing the product is rotated or turned within the dome 516, for exposure of the product to steam and immediate run-off of condensation. At the end of the steaming period, a large steam outlet provides for rapid fall in pressure to optimise bursting of the skin. As will be apparent however from the drawing, the region 516 to be charged with steam is of significantly greater volume, to a multiple degree, than the region 519 of this system actually containing product, so that the system of Fig. 5 is somewhat extravagant in its use of steam, while also the ability to secure rapid or flash blow-off of the steam with substantially instantaneous reduction in pressure is reduced, because of the very great volume of steam to be relieved.

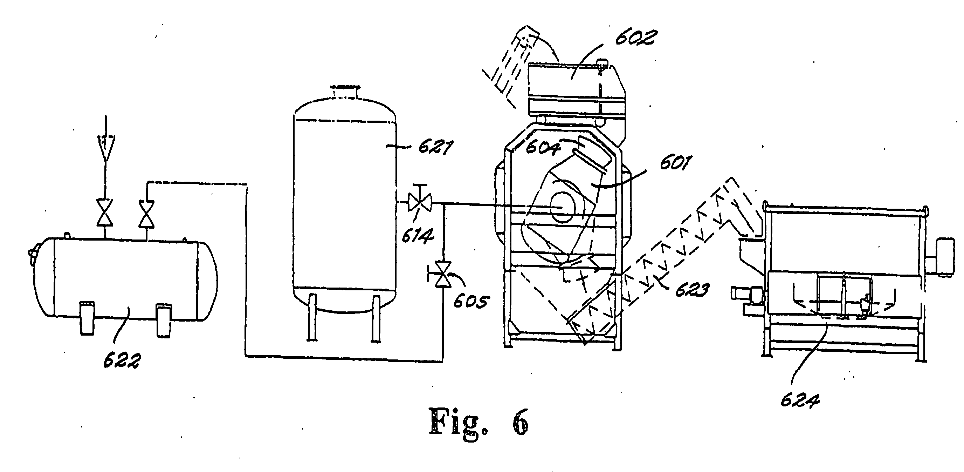

Fig. 6 shows a prior art steam peeling system developed by the Applicants for the present invention, using a rotating pressure vessel 601 and various associated equipment. The vessel 601 is of generally symmetrical cylindrical form about an axis of symmetry, which extends in the plane of the paper, and the vessel 601 is rotatable about a substantially horizontal axis which, as shown in the drawing, extends perpendicular to the plane of the paper. Product is brought to the steam peeler vessel 601 by way of an in-feed container and is batched in a hopper unit 602 which supplies product through the pressure vessel 601 door opening or mouth 604 when the vessel 601 is oriented in a generally upward disposition. When the vessel 601 is sealed, rotation takes place about the substantially horizontal axis perpendicular to the plane of the paper, without rotation of the pressure vessel 601 about its axis of symmetry, and at the end of the steaming period, the pressure vessel 601 is relieved such as by valve 614 to a large volume exhaust vessel 621, for so-called "rapid flash" or expedited reduction in steam pressure within the pressure vessel 601, thereby engendering effective bursting of the peel from the surface of the product. Charging of the vessel 601 for the steaming period takes place in substantially known manner such as via valve 605 from a steam accumulator 622. Product is discharged from the pressure vessel 601 in a substantially inverted disposition thereof and is then brought by way of a product transfer auger 623 to a centrifugal separator 624, where peel is removed and discharged to waste, while the peeled product is advanced to further food processing operations as may be required.

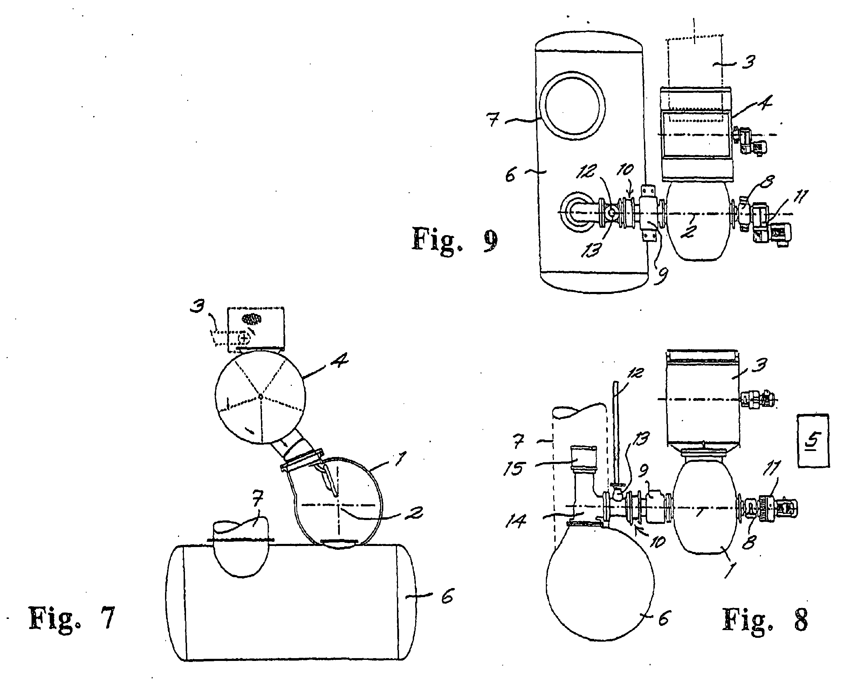

Referring now to Figs. 7, 8 and 9, there is shown another known steam peeling system incorporating a steam peeling pressure vessel 1. As shown in particular in the end view of Fig. 8, the steam peeling vessel 1 is mounted for rotation about an axis 2 which extends substantially horizontally. The pressure vessel 1 is supported for rotation on a structure also providing operator access to the system, whenever required. Infeed to the pressure vessel 1 is provided by a conveyor belt 3 to a rotary batching unit 4, by which product may be transferred from the infeed belt 3 to the pressure vessel 1 in measured quantities.

Referring again in particular to Fig. 8, the relative dispositions of the batching unit 4 and the pressure vessel 1 are again shown, together with the relationship between the pressure vessel 1 and an expansion chamber or vessel 6 which is located to the rear of and below the pressure vessel 1 in terms of Fig. 1. As indicated in Figs. 8 and 9, a large diameter stack 7 extends from the expansion chamber to a discharge location (not shown) for waste or exhaust steam treatment. The expansion chamber 6 may be provided with special fast condensing facilities. The compact arrangement of the various units of the system facilitates an assembled structure defining an especially cohesive package occupying a minimal spatial volume. A control unit is identified in schematic or block form, this representing typically a computerized and programmable arrangement connectable to and connected with in the various operative, drive and control features of the pressure vessel and system in known manner, by suitable wiring or other communication links.

Referring now to the top view of Fig. 9, the relative dispositions of these various features will be again apparent, and in particular, as also shown in Fig. 8, the locations of bearings 8, 9 for the rotary pressure vessel 1 and also the disposition of a steam line 10 between vessel 1 and expansion chamber 6 are especially apparent. The rotating mounting and steam discharge arrangements for the pressure vessel include, on the righthand side of the pressure vessel 1, drive effected at the righthand bearing mounting 8 by way of a motor 11. On the lefthand side of the drawing, steam entry and exit is effected through the lefthand bearing mounting 9, which provides for communication between the interior of the pressure vessel 1 and the steam charging and discharge line 10 by way of a rotary gland 56 with suitable packing incorporated within the lefthand bearing structure 9. Thus steam admission and steam discharge takes place through a single steam port, although a two-port arrangement is also possible, with a separate inlet and exhaust ports. Steam is fed into the pressure vessel 1 through a charging line 12 by way of a suitable valve arrangement 13. Beyond the charging connection via steam supply valve 13, the steam passage 10 from the pressure vessel 1 terminates at an expansion valve 14, which is mounted directly at and suitably on top of the expansion chamber 6 and defines a steam pressure release means of the system enabling rapid blowdown of the pressure vessel 1 at the required stage during a steam peeling cycle of operation. Valve 14 is suitably driven by a motor 15.

The exhaust port of the pressure vessel represents therefore the single port of the vessel, serving also as the steam admission or inlet port. Thus there is, in the system embodied in the present drawings, a single unitary entry port and exit port.

Also shown in Figs. 8 and 9 are drive motor and drive gear arrangements 32 and 33 respectively for vessel 1 and batching unit 2 respectively.

### BRIEF SUMMARY OF THE INVENTION

In a first aspect, there is provided according to the invention, a method for steam peeling product within a pressure vessel, comprising, during a predefined peeling cycle period, the steps of a) initiating a steam charging period during which the vessel is charged with steam, and b) discharging steam from the pressure vessel at the end of the peeling cycle period, characterized in that the steam charging action is regulated to achieve, at initiation of said discharge of steam, a target temperature value for an outer surface region of product to be peeled, said target temperature value being indicative of minimum loss of useful and usable product during a peeling operation; wherein the step of regulating the steam charging action comprises admitting steam to the pressure vessel at a first rate of supply for part of the peeling cycle period, and controlling the inflow of steam to the pressure vessel for at least a part of the remainder of the peeling cycle period at a second rate of supply which is reduced compared with the first rate of steam supply, prior to said discharging of steam from the pressure vessel.

Said at least one parameter indicative of a desired peeling result is a temperature value for an outer surface region of product to be peeled, which may be established directly where such a measurement is achievable. Alternatively said temperature value for an outer surface region of product to be peeled may be derived from at least a temperature value for the steam within the pressure vessel. Thus said at least one parameter indicative of a desired peeling result may be indicative of conditions within the pressure vessel.

A parameter indicative of pressure vessel internal ambience may thus be selected from a value or values for pressure and/or temperature within the vessel, or a parameter representing the skin or peel temperature of the product to be peeled, where this temperature is determinable, may be employed directly.

Accordingly, the target value of said at least one parameter indicative of the desired peeling result may be represented by a value or values for conditions within the pressure vessel. Such representative parameter(s) may be selected to facilitate an acceptable quality of peeling action for product to be treated. Thus the purpose of the regulation of steam supply or admission to the pressure vessel is to enable substantial optimization of peeling conditions at the end of the product treatment cycle in the pressure vessel, while yet allowing economy in use of steam, as compared with unregulated steam supply, with the steam source merely connected to the interior of the pressure vessel for the full duration of the pressure cycle and the interior of the vessel and the product contained within it thereby being subjected to the full pressure and temperature of the steam supply throughout the peeling cycle. The pressure regulation process may involve a dual control of pressure.

A parameter indicative of conditions within the pressure vessel may be selected from at least one of pressure and temperature, a parameter representative of product temperature as such being optionally derivable from such pressure/temperature determination for the atmosphere within the pressure vessel during steaming. In a preferred embodiment, a parameter indicative of conditions within the pressure vessel comprises steam pressure. Measurement or monitoring of steam pressure enables establishment of a good estimate of product surface temperature at successive time increments during the steam phase of the product treatment cycle and enables precise application of optimum pressure and temperature conditions and steaming times. The steam supply, i.e. the rate and/or duration of admission of steam to the pressure vessel is then controlled so that, at the end of the treatment cycle, the temperature within the pressure vessel is adapted to enable effective peeling action to take place. Thus the end temperature may be regulated to be in excess of a predetermined minimum value. The regulation may also provide for the pressure within the vessel immediately before blowdown to be likewise above a predefined value, also related to good peeling performance.

According to the invention, the step of regulating the steam charging action comprises admitting steam to the pressure vessel at a first rate of supply for part of the peeling cycle period, and controlling the inflow of steam to the pressure vessel for at least a part of the remainder of the peeling cycle period at a second rate of supply which is reduced compared with the first rate of steam supply. Alternatively, the step of regulating the steam charging action may comprise alternating the inflow of steam to the pressure vessel for at least a part of the peeling cycle period between a substantially full-flow value and a reduced-flow value. Yet another option provides for the step of regulating the steam charging action to comprise terminating the steam charging period at a time which is less than the peeling cycle period by a significant fraction of the peeling cycle period, and holding the vessel closed against the external environment during the remainder of the peeling cycle period. Regulation of time duration in this way may be adapted to suit an individual product but is not appropriate for a universal system capable of handling a diversity of products. The preferred modes of operation are therefore reducing the inflow of steam to the pressure vessel for at least a part of the peeling cycle period or alternating the inflow of steam to the pressure vessel for at least a part of the peeling cycle period between a substantially full-flow value and a reduced-flow value. Thus a dual regulation of pressure is in question. The method of the invention is especially applicable method to steam peeling systems in which rotation of the pressure vessel is effected for at least part of the peeling cycle period.

The invention encompasses in addition for steam peeling product during a predefined peeling cycle period, the apparatus comprising a pressure vessel, means for charging the pressure vessel with steam, means for discharge of steam for the pressure vessel, and control means for initiating a steam-charging period during which the vessel is charged with steam, regulating the steam charging action so that a target value of at least one parameter indicative of a desired peeling result is achieved at a predetermined stage during the peeling cycle period, and initiating said discharge of steam from the pressure vessel at the end of the peeling cycle period; wherein said control means (5) is adapted to admit steam (13; 13a) to the pressure vessel (1) at a first rate of supply for part of the peeling cycle period, and to control (26, 27; 23; 13a) the inflow of steam to the pressure vessel (1) for at least a part of the remainder of the peeling cycle period at a second rate of supply which is reduced compared with the first rate of steam supply, prior to said discharge of steam from the pressure vessel.

Preferably, the apparatus comprises means for establishing a temperature value for an outer surface region of product to be peeled, said temperature value comprising said at least one parameter indicative of a desired peeling result. Alternatively, the apparatus may comprise means for deriving said temperature value for an outer surface region of product to be peeled from at least a temperature value for the steam within the pressure vessel. In a further embodiment, the apparatus may comprise means for establishing conditions within the pressure vessel to provide said at least one parameter indicative of a desired peeling result, said means including for example means for establishing at least one of pressure and temperature within the pressure vessel. In a particular construction, the apparatus may comprise means for establishing steam pressure within the pressure vessel to provide said at least one parameter indicative of conditions within the pressure vessel, or means for establishing steam temperature within the pressure vessel to provide said at least one parameter indicative of conditions within the pressure vessel.

The at least one parameter indicative of conditions within the pressure vessel may therefore be selected from at least one of pressure and temperature, pressure being preferred. In a favoured construction, the at least one parameter indicative of conditions within the pressure vessel comprises steam pressure. In all variants of the apparatus of the invention, the target value of said at least one parameter indicative of conditions within the pressure vessel is preferably selected to facilitate an acceptable quality of peeling action for product to be treated, as explained above in respect of the method of the invention.

In apparatus for steam peeling according to the invention, the control means is adapted to admit steam to the pressure vessel at a first rate of supply for part of the peeling cycle period, and to control the inflow of steam to the pressure vessel for at least a part of the remainder of the peeling cycle period at a second rate of supply which is reduced compared with the first rate of steam supply. Alternatively, the control means may be adapted to regulate the steam charging action by alternating the inflow of steam to the pressure vessel for at least a part of the peeling cycle period between a substantially full-flow value and a reduced-flow value, while in a simplified variant, the control means may be adapted to terminate the steam-charging period at a time which is less than the peeling cycle period by a significant fraction of the peeling cycle period and to hold the vessel closed against the external environment during the remainder of the peeling cycle period. In an environment in which regulation is effected only by steam time, any change in any of the system variables, e.g. product size, will affect final pressure. Hence for a versatile system, active control is preferred.

The steam charging action is thus preferably regulated by reducing the inflow of steam to the pressure vessel for at least a part of the peeling cycle period or by alternating the inflow of steam to the pressure vessel for at least a part of the peeling cycle period between a substantially full-flow value and a reduced-flow value. In this latter embodiment, the apparatus may comprise a full-flow steam admission valve and a reduced flow steam admission valve. In a favoured construction, the full-flow steam admission valve is provided in a main steam admission line, while the reduced flow valve is located in a bypass steam line, which suitably comes into action following or simultaneously with termination of steam flow through the main supply line.

In a preferred embodiment, the pressure vessel is adapted to be driven in rotation during at least part of the peeling cycle period. The apparatus of the invention suitably also comprises control means for coordinating the operation of each of the various means of the apparatus.

Thus, in a specific construction, the invention provides a steam peeling system which has a pressure vessel charged with steam for a peeling cycle period at the end of which steam discharge is effected to an exhaust tank via an exhaust valve. The steam charging action is regulated to achieve, at a predetermined stage of the peeling cycle period, a target value for a parameter indicative of a desired peeling result. This parameter may be a temperature value for an outer surface region of product to be peeled or a measure of the pressure or temperature of the steam within the pressure vessel, from either of which an estimate of the surface temperature of the product may be developed for each stage of the steam phase of the product treatment cycle. The required regulation of the steam charging action may be achieved by the supply of steam, for a first part of the peeling cycle period, to the pressure vessel being effected via a main steam line and on/off steam supply valve. At a time before the end of the peeling cycle period, the main steam supply is shut off and inflow of steam to the pressure vessel is continued for at least a part of the remainder of the peeling cycle period, at a rate which is reduced compared with that available via the main steam supply route, by way of a bypass line. The bypass steam flow is controlled by a valve in line in response to control signals established by controller based on a measurement by transducer of the pressure within the vessel as present also in the exhaust line which is in open communication with the interior of the pressure vessel.

In further aspects, the invention extends to a computer program comprising program instructions for causing a computer to perform the method of the invention, as well as a control system for implementing the method of the invention. In particular, the invention may provide a computer implemented system for steam peeling product within a pressure vessel during a predefined peeling cycle period, the system comprising: a) means for initiating a steam charging period during which the vessel is charged with steam, b) means for regulating the steam charging action so that a target value of at least one parameter indicative of a desired peeling result is achieved at a predetermined stage during the peeling cycle period, and c) means for discharging steam from the pressure vessel at the end of the peeling cycle period; wherein the means for regulating the steam charging action are adapted to admit steam to the pressure vessel at a first rate of supply for part of the peeling cycle period, and control the inflow of steam to the pressure vessel for at least a part of the remainder of the peeling cycle period at a second rate of supply which is reduced compared with the first rate of steam supply, prior to said discharging of steam from the pressure vessel.

Steam peelers operating at relatively low pre-blowdown pressures represent substantially ideal conditions for application of the proposed steam-saving technique according to invention, but the invention is not limited to such installations.

The improvements of the invention provide a diversity of additional benefits to users of rotational pressure vessels in peeling systems. The features of the invention are also retrospectively applicable to existing installations. Advantages achieved by the improvements of the invention are reduced cook ring, as hereinafter explained. Substantially lower steam usage is also to be expected, of the order of 10-20% reduction, this saving between $25,000 and $50,000 a year in typical installations. Significantly lower noise levels are also achieved, because of the lesser extent of periods of high pressure operation. Wear and tear on equipment is reduced, in particular in regard to the valves and also the peripheral regions surrounding doors. There is lesser usage of water, by virtue of the improved recovery of condensate. Re-use of condensate is also facilitated, especially where small products are treated. In addition to the possibility of re-using condensate, there is also a lesser absolute accumulation of condensate within the system at the end of the steaming phase. Carry-over of solids is also reduced and the possibility of eliminating a downstream cyclone is available.

Other aspects of the advantages achieved by the invention include the separation of condensate, admission of steam at high pressure but exhaust at a significantly lower pressure than that of admission. Further advantages may be achieved by suitable adaptation of lifter profiles and adaptation of the door to facilitate the passage of higher volumes of product. Rotation at higher speed during steaming and exhaust and discharge at higher speed also proved to be advantageous, as effected by modification of the rotational programme. In its rotational programme aspect, the invention may also be combined with the steam bypass feature, thereby effecting a still further combination of advantages.

In an example there is provided a method of steam peeling wherein movements of a rotatable pressure vessel for steam treatment of product to be peeled are effected between loading and discharge dispositions of a pressure vessel through a succession of treatment stages, wherein rotation of the pressure vessel is effected at a first speed of rotation for part of a steam charging period and at a second speed of rotation for at least part of the remainder of the steam charging period. The second speed of rotation is suitably greater than the first speed of rotation. Steam charging of the pressure vessel is preferably terminated while the vessel is undergoing rotation at the second speed of rotation, while also discharge of steam from the pressure vessel may be likewise initiated also while the vessel is undergoing rotation at the second speed of rotation. In addition, opening of the pressure vessel door prior to product discharge may be effected while the vessel is undergoing rotation at the second speed of rotation, white a further option provides for discharge of product to completed while the vessel continues to rotate in the same direction of rotation as the direction of vessel rotation during the steam charging phase.

In this example, there may also be provided a steam peeling system comprising a control system for regulating movements of a rotatable pressure vessel for steam treatment of product to be peeled between loading and discharge dispositions of a pressure vessel through a succession of treatment stages, wherein rotation of the pressure vessel is effected at a first speed of rotation for part of a steam charging period and at a second speed of rotation for at least part of the remainder of the steam charging period. The second speed of rotation may be greater than the first speed of rotation. The control system may be adapted to terminate charging of the pressure vessel with steam while the vessel is undergoing rotation at the second speed of rotation and also to initiate discharge of steam from the pressure vessel while the vessel is undergoing rotation at the second speed of rotation. In a particular arrangement, the control system may be further adapted to initiate opening of the pressure vessel while the vessel is undergoing rotation at the second speed of rotation and/or to continue rotation of the pressure vessel throughout the product discharge phase in the same direction of rotation as the direction of vessel rotation during the steam charging phase.

The example also extends to a computer program comprising program instructions for causing a computer to perform the two-speed method of pressure vessel rotation disclosed above, as well as to a control system for implementing the foregoing method.

This example may thus encompasses in 'addition' a computer implemented system for steam peeling product within a rotatable pressure vessel during a predefined peeling cycle period, the system comprising:
a) means for initiating a steam charging period during which the vessel is charged with steam,
b) means for regulating movements of the pressure vessel between loading and discharge dispositions thereof through a succession of treatment stages, wherein rotation of the pressure vessel is effected at a first speed of rotation for part of a steam charging period and at a second speed of rotation for at least part of the remainder of the steam charging period, and
c) means for discharging steam from the pressure vessel at the end of the peeling cycle period.

The modified rotational programme in particular leads to more uniform peel loss, with a tighter band as subsequently defined. The variation in rotational speed combined with pressure increase during the steaming phase enables the actual steam time to be reduced, while also enabling the optimum batch-load for any particular product to be increased. On small products, use of this aspect of the example leads to reduced peel loss and therefore to increased yield of valuable product.

A further example may be a system for steam peeling product within a pressure vessel during a predefined peeling cycle period, the system comprising:
a) means for initiating a steam charging period during which the vessel is charged with steam, and
b) means for discharging steam from the pressure vessel at the end of the peeling cycle period, wherein actuation of the steam discharge means is coordinated the termination of the steam charging period and opening of the pressure for product discharge so as to facilitate substantially optimized recovery of condensate.

This further example may extend to apparatus for steam peeling product within a pressure vessel during a predefined peeling cycle period, the system comprising:
a) means for initiating a steam charging period during which the vessel is charged with steam, and
b) means for discharging steam from the pressure vessel at the end of the peeling cycle period, and
c) means for coordinating actuation of the steam discharge means with the termination of the steam charging period and opening of the pressure for product discharge so as to facilitate substantially optimized recovery of condensate.

### BRIEF DESCRIPTION OF THE DRAWINGS

The invention is now described with reference to the accompanying drawings, in which:
Fig. 1 shows a first prior art arrangement of rotatable pressure vessel for steam peeling food products,
Fig. 2 shows a second prior art arrangement of rotatable pressure vessel for steam peeling food products,
Fig. 3 shows a third prior art arrangement of rotatable pressure vessel for steam peeling food products,
Fig. 4 shows a first prior art arrangement for steam peeling food product in which a static pressure vessel is used,
Fig. 5 shows a second prior art arrangement for steam peeling food product in which a static pressure vessel is used,
Fig. 6 shows a further prior art steam peeling system in which a rotatable pressure vessel is used,
Fig. 7 is a side view of another known system comprising a rotatable steam peeling vessel and associated features, to which the present invention is particularly applicable,
Fig. 8 is an end view from the righthand side of the arrangement of Fig. 7,
Fig. 9 is a top or plan view of the arrangement according to Figs. 7 and 8,
Fig. 10 shows a cross-section through a steam peeling vessel for the system of Figs. 7 to 9 charged with product to be peeled, illustrating certain underlying principles relevant to the present invention,
Fig. 11 is a plot of steam pressure vs. time, showing the effect of termination of steam supply, in accordance with the principles of the invention, prior to the end of the steaming phase and the initiation of blow-down,
Fig. 12 is a plot of temperature vs. time for the steaming phase of a steam peeling operation carried out on potatoes, showing steam temperature and the temperatures developed at the level of the surface of the potato and at various depths below the product surface,
Fig. 13 shows a schematic representation of a first embodiment of peeling apparatus according to the invention in which pressure control during a final phase of steaming is regulated via a steam bypass line,
Fig. 14 shows an alternative arrangement in which the final phase regulation of steam pressure is effected by action of the main steam supply valve,
Fig. 15 shows yet another possible configuration of the steam bypass feature using a straight-through valve for the main steam supply in place of the angle valve of Fig. 13,
Fig. 16 shows a representation of an exemplary known rotational programme for carrying out a steam-peeling operation,
Fig. 17 shows a novel rotational programme for effecting steam-peeling in accordance with a particular aspect of the present invention, and
Fig. 18 shows a modification of the programme of Fig. 17, affording alternative options for executing a steam peeling programme cycle.

### DETAILED DESCRIPTION OF THE DRAWINGS

Figs. 1 to 9 inclusive relate to prior art peeling systems and have already been discussed.

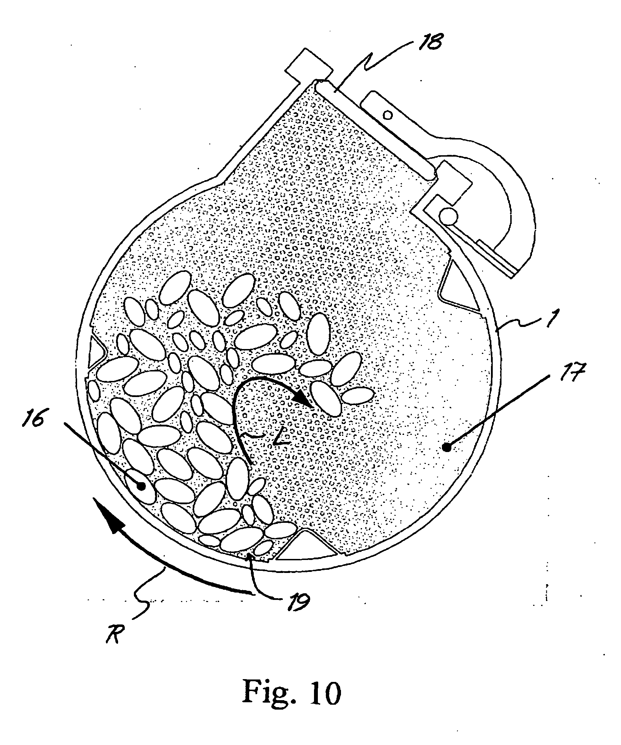

As shown in Fig. 10, the rotatable steam peeling vessel 1, even when charged with product 16 (such as potatoes), continues to feature a large void region 17, the product items initially lying in the base region 18 of the vessel 1 when the vessel mouth 19 is upwardly directed. Maximum efficiency in peeling requires a balance between the size of the void 17 as compared with the space occupied by the product 16 and the quantity of product to be peeled, this to allow optimized contacting of the steam with the product. There is thus an optimum balance between the quantity of product 16 and the size of the void 17, which is also tied in with steam pressure and steam time. As shown in Fig. 10, the vessel 1 is depicted in rotation in the clockwise direction indicated by the external arrow R, while the likewise clockwise circulation and uplift of product 16 within the pressure vessel, this effected by internal lifting features, is denoted by the internal arrow L, the product being shown undergoing a lifting and/or tumbling or agitatory action.

Total steam usage in the peeling process is determined by the sum of the steam used by product 16 to be peeled and the steam in the void space 17 at the end of the peeling cycle. The steam used by the product 16 condenses at the end of the peeling operation. Steam in the void space 17 is evacuated to the exhaust tank 6 at the end of the steaming time. This steam does not condense but forms a significant and non-recoverable proportion of the steam used in the product treatment cycle.

If delivery or charging of steam to the pressure vessel is ceased before blowdown or pressure release by closure of the steam supply or admission valve, there is thus a period when the vessel 1 defines a closed region containing a defined quantity of steam. The pressure of this steam in the vessel 1 then drops, after steam supply or admission is terminated by closure of the admission valve, according as latent heat passes from the steam into the potatoes (i.e. product 16). However, the reduction in steam temperature resulting from this drop in pressure is minimal, since the steam pressure/temperature plot is relatively flat in this pressure range, which continues to prevail within the still-closed pressure vessel 1 during the period after cessation of steam supply but before the commencement of pressure vessel blow-down by opening of the expansion (exhaust/blowdown) valve. Furthermore, tests have shown that this drop in pressure as a result of early cessation of steam delivery or admission does not impair the efficiency of the peeling, while it may lead to improvement in the exhaust time, i.e. a reduction in the time needed for exhaust.

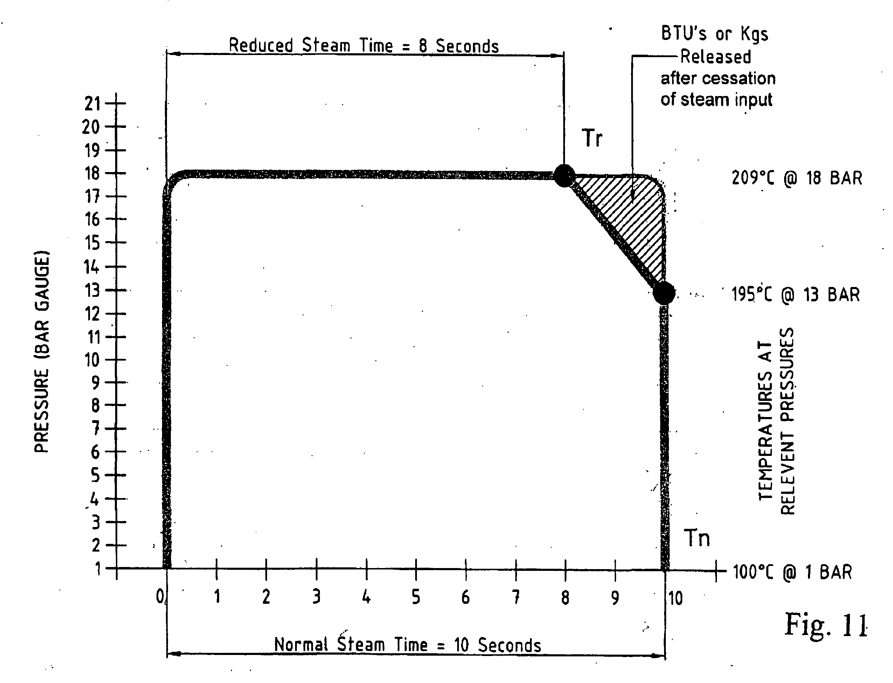

According to the invention and as shown in the diagram of Fig. 11, there is a termination of steaming by closure of the steam inlet valve at a time such that pressure and temperature fall within the sealed pressure vessel until blow-down is initiated by opening the exhaust valve. This reduced steam time terminates at time Tr, as compared with the normal steam time Tn, which would represent the termination of the steam charging period, if steam supply were to be maintained right up to blowdown at time Tn. It is thought to be significant that the pressure drop from steam shut-off at Tr to the moment Tn at which blow-down is effected (i.e. opening the exhaust valve) appears to be non-critical to successful peeling, provided that the final temperature immediately prior to blowdown is in accordance with a predefined criterion or predefined criteria equating to a sufficiency of heat having been transferred to the product as is required for the specified peeling regime. Accordingly, steaming may be terminated at a time such that a target temperature is reached or maintained at blow-down. The target value may be a minimum temperature, defined as a value below which the likelihood of effective peeling being achieved falls below an acceptable level.

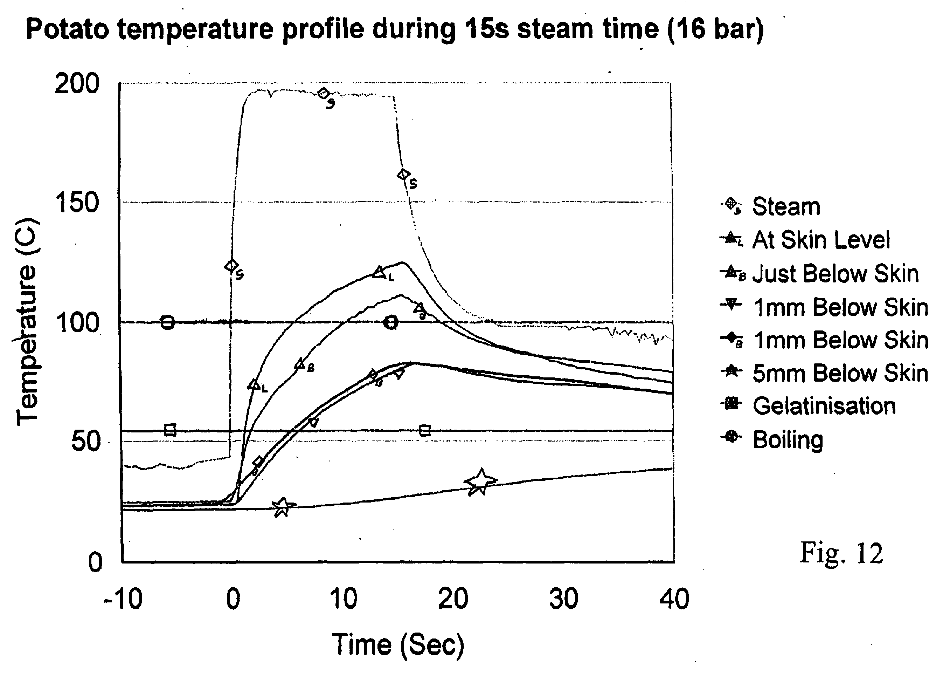

Fig. 12 is a plot of steam temperature vs. time for a steam peeling operation effected on potatoes, showing the steam temperature over the cycle, and the temperatures achieved at the surface of the product and at various depths below the surface according as the steam cycle progresses towards its termination. It will be seen that product surface temperature rises at a decreasing rate towards a peak value achieved at steam blowdown, from which it then falls away as peeling action takes place with separation of the skin of the product. It will be noted that the generally square profile of the steam temperature values within the pressure vessel during the steaming phase closely match the shape of the pressure profile of Fig. 11, while as also noted in Fig. 11, temperature is only marginally lowered by early cessation of full steam supply at a time prior to the end of the steam phase. Thus a close approximation of product surface temperature may be determined from a measurement of the pressure within the vessel, derived in conjunction as required with the progression in time of the steam cycle.

The final target temperature may thus be based on an actual sample measurement of the surface temperature of product to be peeled, or it may be established by correlation of an appropriate steam temperature at Tn with a product surface temperature known to be achievable under the pressure and temperature conditions prevailing at time Tn. This relationship may be determined by experimentation to facilitate determination of a time Tr at which normal steaming (i.e. steam supply at full flow rate and pressure) may be terminated.

A variant may provide for the steam supply valve to be toggled during part or all of the steam phase (i.e. on-off operation of the valve), so that for example a saw-tooth type pattern of pressure vessel pressure is established in which pressure falls while the valve is shut and steam supply does not take place, and the fall in pressure is followed by a period of rising pressure (and temperature) during a further steam charging period, all within the overall envelope of the steam peeling cycle. Other patterns of operation of the steam supply valve may also be applied. However, operation of steam valves in this manner may lead to accelerated erosion of the valves. A two-valve option thus represents a preferred arrangement, with a larger cross-section steam supply valve being closed at a first appropriate stage (Tr) to cease large-scale steam supply, and a limited amount of steam admission through a smaller steam supply valve then continuing for a further period, optionally through to time Tn, with control/regulation of steam supply level in accordance with temperature or pressure recorded/measured within the pressure vessel. A two-part curve, approximating to a decay curve, may in this variant be achieved, starting from the closure of the initial steam supply valve, this being followed by a period of controlled pressure drop during which steam continues to be charged at a lesser rate via the second steam supply valve with the temperature within the vessel thus declining towards a final target value, and the steam phase then concluding finally with a period during which no further steam admission takes place at all following closure of the second smaller steam supply valve.

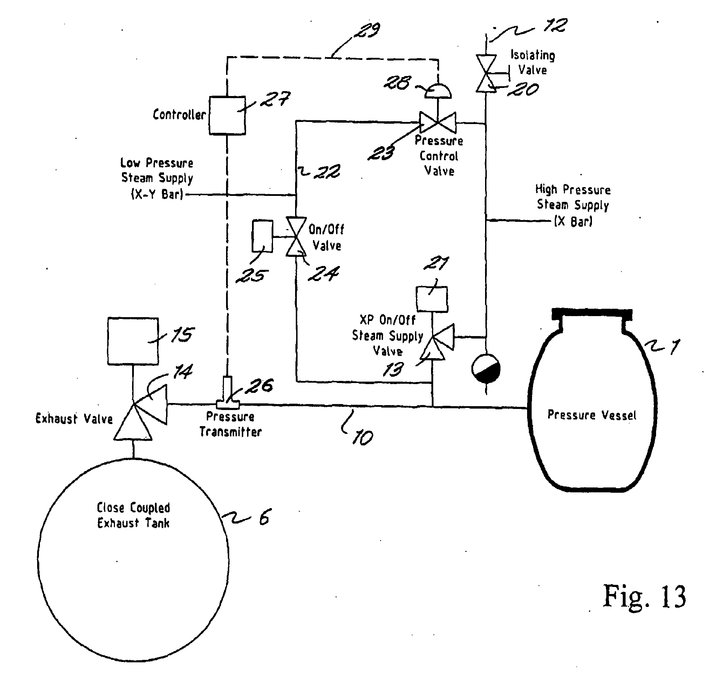

As shown in Fig. 13, a pressure vessel 1 for carrying-out a steam-peeling operation is supplied with steam by way of a high pressure steam supply line 12 via an initial isolating valve 20, which feeds steam at a pressure of x bar, by way of an on/off steam supply valve 13 actuated by a motor 21 to an input/output steam line 10 for the vessel 1. At the end of the steam-peeling cycle, the steam pressure is relieved from the peeling pressure vessel 1 to an exhaust tank 6 by way of a large flow-area exhaust valve 14, actuated by motor 15.

In order to establish a controlled pressure value, which does not fall below a pre-determined minimum, during the final phase of the steam-peeling operation, a steam bypass line 22 is provided, leading from the high-pressure steam supply line 12 upstream of the main steam supply valve 13 by way of a pressure control valve 23 and an on/off valve 24 to a location downstream of the main steam supply valve 13. As soon as the main steam supply is shut off by closure of valve 13, at the end of the main steaming period, the bypass line is opened by actuation of the motor 25 for the on/off valve 24 and the flow of steam through the bypass line 22 is then regulated by means of the pressure control valve 23 in accordance with the pressure within the pressure vessel 1 as determined by a pressure transmitter or transducer 26 on the steam line 10 leading from the peeling pressure vessel 1 to the exhaust valve 14. Signals indicating the pressure within the steaming vessel as detected by this transducer 26 are converted by way of a controller 27 into a value determining the action of the pressure control valve in the bypass line and are fed from controller 27 via line 29 to motor 28 for regulated actuation of valve 23.

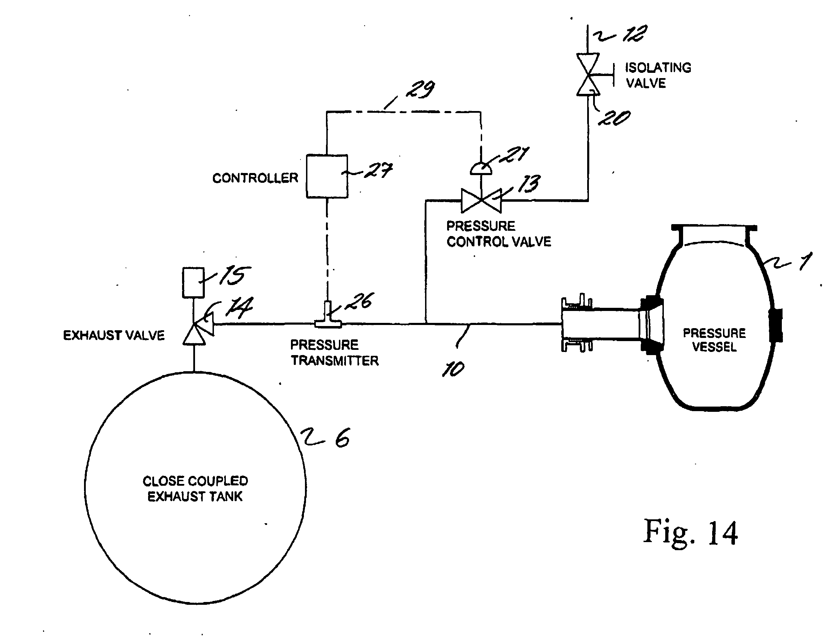

An alternative arrangement is depicted in Fig. 14, in which the bypass line is dispensed with and the pressure transducer 26 communicates via controller 27 and line 29 directly with a drive feature 21 acting on the movable valve member of the on/off steam supply valve 13. On/off operation of the steam supply valve 13 is effected to regulate pressure conditions within the steaming vessel 1 during the final phase peeling action, when continuous full-flow steam supply has been terminated. Valve operation may oscillate between fully-open and fully-closed, or the steam feed rate may be regulated by partial opening/closing of the valve flow passage, so the flow area is varied and a throttling action is effected on the steam flow.

An arrangement is also possible in which activation of both a main steam supply valve and of a pressure control valve in a bypass line are both available, as required during the steaming cycle.

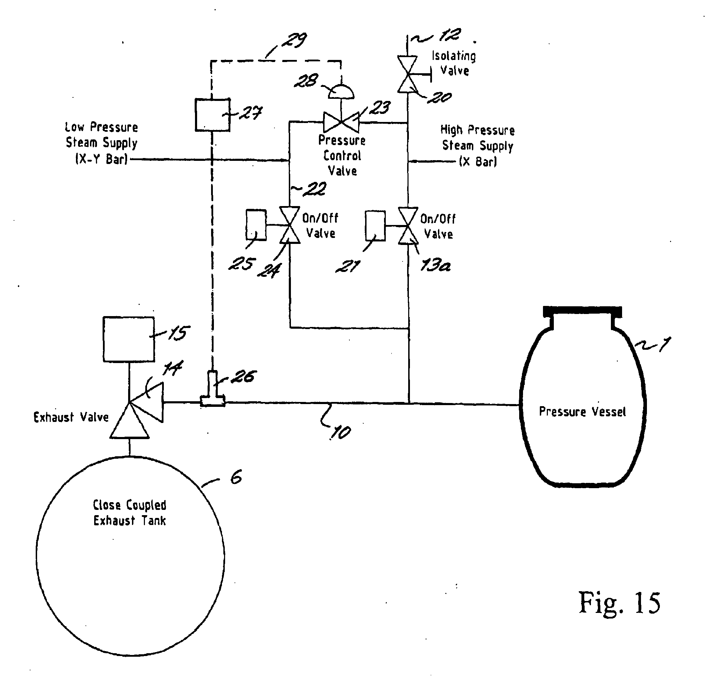

Fig. 15 shows an alternative embodiment of the steam supply arrangement involving a bypass line 22, in which a straight-through variant 13a of the main on/off steam valve is provided, as compared with the angle valve 13 of Figs 13 and 14. However, the presence of an annular seat in an angle valve, as compared with the initially arcuate or sector-shaped passage region becoming available for fluid flow on first opening actuation of a straight-through valve provides better performance in terms of valve wear and tear, by virtue of reduced erosion of the valve seat and closure member and the angle valve arrangement represents a preferred construction.

The invention in each of its possible embodiments can therefore be defined in terms of a performance evaluation related to conditions at the end of the steam cycle.

Thus, the system of the invention allows for either no control, or preferably for regulated pressure control towards the end of the cycle by way of the new control system now shown in the drawings discussed above. This latter arrangement manages the process to achieve the desired result by controlling or regulating pressure during the final phase after the main steam input is cut off. Main steam input can be by way of admission through an angle valve or a straight-through valve, these arrangements being shown in Figs. 13 and 14 on the one hand (angle valve) and Fig. 15 (straight-through).

The final pressure is controlled during the decay period after termination of main steam supply, so that for example the pressure at no time falls below 14 or 15 bars, the exact figure depending on the product. As soon as the main valve is shut off, the on/off valve in the bypass line is opened and further regulation of the pressure in the pressure vessel is achieved by operation of the control valve in accordance with a feed-back pressure signal derived from an evaluation or measurement of instantaneous actual pressure in the pressure vessel. This pressure control valve in the bypass line thus responds to the pressure monitor detecting the pressure within the (suitably rotary) pressure vessel and thus controls steam flow through the bypass line so that the pressure at final blowdown remains above a desired figure. The pressure control and flow (shut-off) valves in the bypass route may be combined, although this is not a particularly preferred arrangement.

Two types of control are then possible, as follows:
1. A simple on/off control based on whether or not pressure drops below a prescribed minimum value.
2. A preferred method in which the pressure decline during the end of the steaming phase is regulated to follow an algorithm. This algorithm may be a straight line, although more complex curves are also possible. Use of an algorithm is preferred for process consistency. In other words, the peeling effect achieved is more or less the same for all cycles.

The system may however be operated without any of these control features. In addition, the bypass line may also be omitted. This latter thus represents an optional feature, albeit a preferred option.

Accordingly the alternatives or options are as follows:
1. No bypass at all (Fig. 14).
2. Bypass plus on/off pressure control (Figs. 13 and 15).
3. Bypass plus control by algorithm, which can be a straight line algorithm (Figs. 13 and 15).

The main steam supply valve may also serve as the control valve, Fig. 14, but this is not an optimum arrangement. The main steam valve is designed to allow significant steam admission at high speed and valves of this kind are not readily amenable to subtle controls in pressure. In other words, a pressure control valve is required to do a different job and should be a unit specifically designed for this purpose.

In regard to the enhancements achieved by the new process, the term "cook ring" refers to the situation where heat transfer at the surface of the potato increases once the skin starts to lift. What happens is that cells are ruptured or opened up or damaged by the lifting of the skin, so that the differential pressure is then more effective in "digging in", as it were, into the substance of the potato below the skin, i.e. into these ruptured cells. This effect is greatly reduced with the improvement according to the invention, because the differential pressure between a product to be peeled and the surrounding environment is less by dint of the new system. Reduced pressure also results in a diminution in damage to valves, especially the exhaust valve. The life of the valve can be greatly extended by the use of reduced pressure.

Less water is used in condensing the exhaust steam, while in regard to solids collection, it may be possible to completely eliminate any necessity to use a cyclone.

So far as reuse of condensate is concerned, according as pressure drops towards the end of the steam cycle, condensate already accumulated within the pressure vessel flashes back into steam, so that when the pressure vessel finally opens, there is less formation of condensate at that stage. There can be a cycle of condensate formation and reflashing during the pressure decline period. Flashing and recondensing takes place.

Thus at the end of the steaming time there is less condensate present. The final condensate flashes at the end of the steam time, but because there is less of it, there is less steam to exhaust to atmosphere. Hence significant savings in steam usage are achievable.

It is to be noted that the improvements according to the present invention are achievable also in systems in which the pressure vessel is static, as for example in the units shown in Figs. 4 and 5. The embodiments described above, while directed to rotary installations with rotatable pressure vessels are merely exemplary of the principles and features of the invention, and the invention is in no limited to rotary realizations only.

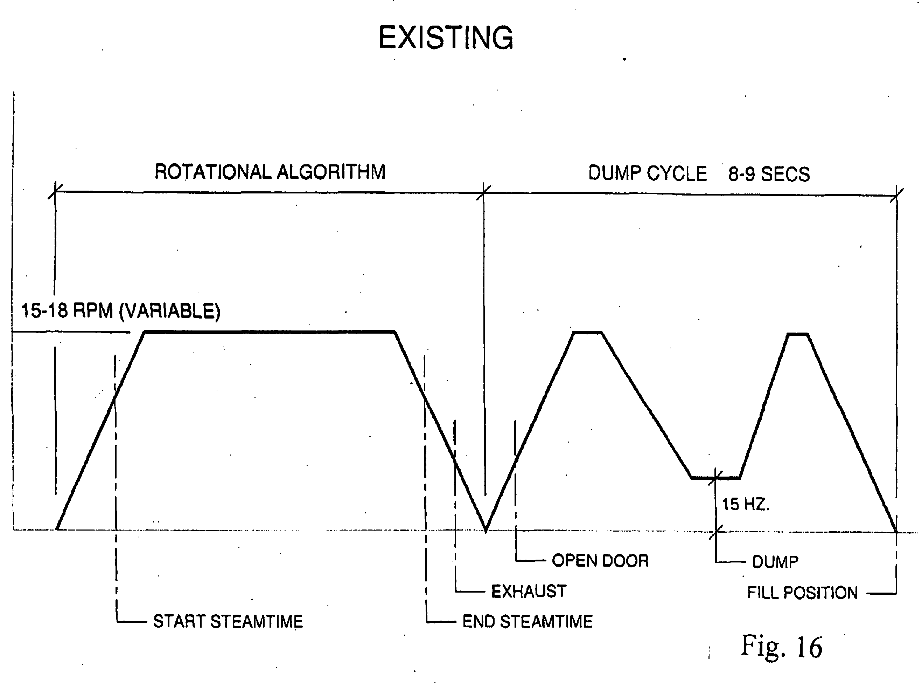

In a further aspect, the invention provides an enhanced rotational programme feature for steam peeling using a rotary pressure vessel. In a known system, illustrated in the diagram of Fig. 16, the speed of rotation is controlled but variable during the steaming phase, being regulated to a more or less constant level within a range of available rotary speeds, the particular speed for a given peeling operation being selected in relation to the type of product and to the type of peeling action required. The cessation of steaming and opening of the door takes place during a slowdown period. This means that product may become clumped together at this time, which has disadvantageous effects in terms of uniformity of peeling.

In a known rotational programme of the prior art, after the door is shut, the steam-peeling vessel is then spun up to a pre-determined number of rotations per minute, rotating in a clockwise direction in a typical embodiment at a speed typically between 15 and 18 rpm, depending on the product, during a period over which the speed of rotation is constant A slowing-down phase then takes place, and during this slowing-down phase, first of all admission of steam ceases, while during the further ramp-down of speed, steam exhaust is effected. The rotary vessel then comes to a standstill and begins to rotate in the opposite direction to commence the dump phase, during which the discharge door is opened for unloading of product. It is spun in an anticlockwise direction with a double-peaked speed profile as shown in the diagram, for product discharge and completes this phase positioned for the next fill.

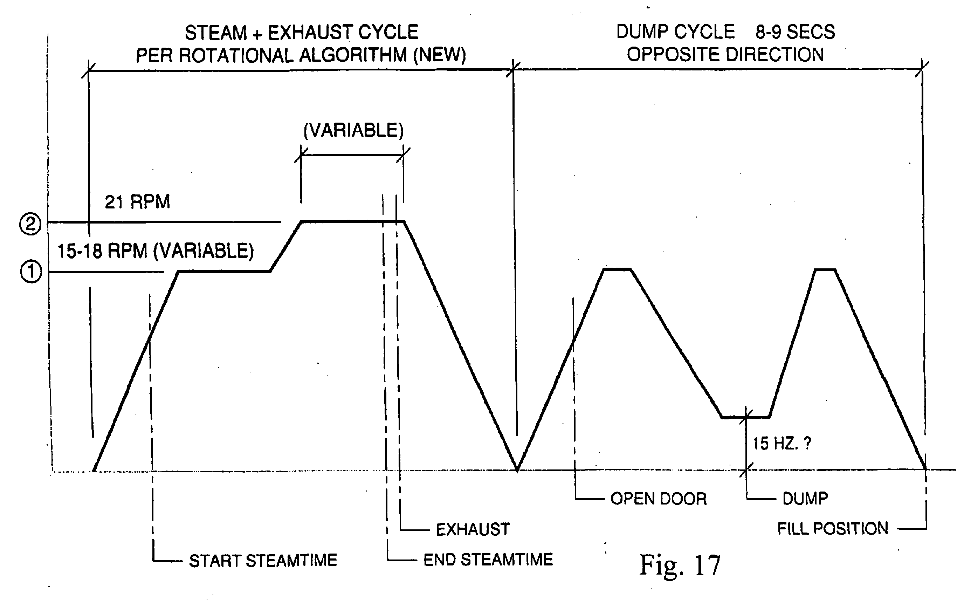

In the example shown in Fig. 17, there is first of all a period of rotation at a predetermined speed in the range of, for example, 15-18 rpm, for which the pressure vessel is charged to a suitable steam pressure value, selected in dependence on the product and peeling circumstances. The speed is then stepped up to a maximum value, which is fixed at a figure representing a maximum rate of rotation compatible with the avoidance of damage to the product and also achievable by the installation. In an exemplary embodiment, this speed value equates to, for example, 21 rpm, but this figure is not to be regarded as in any way limiting, as also is the case for the initial rotation at a speed within the range 15-18 rpm, which values are again purely exemplary and do not determine any definitive delimitation of viable speeds of rotation applicable to the system of the example. During the higher speed period of rotation, which may be variable in duration, steaming stops and exhaust is initiated immediately prior to the commencement of slowdown from full speed. Thus product continues to move around to a greater extent than under the prior art regime, according as the pressure vessel drum rotates first of all to the standstill position, from which it commences the dump cycle with rotation in the opposite direction and opening of the discharge door. A diversity of advantageous effects are achieved. In particular, evaporation of steam from product is accelerated by the product continuing to be agitated/tumbled throughout the exhaust period and also into the first stage of the dump cycle, as compared with evaporation having to take effect through heaped product at a stage when the vessel speed of rotation is very low or the vessel becomes momentarily stationary, in which circumstances, there is slower clearance of steam from the vessel. This is the case when the interval between the termination of steaming and exhaust, on the one hand, and the opening of the discharge outlet opening, on the other hand, is relatively short and the speed of vessel rotation between these events is relatively low, so that steam requires to evaporate from product via narrow passageways through the heaped and substantially static product units. Tighter band is also achieved by the improvement according to the example, this meaning that there is more consistency in peeling from e.g. potato to potato. "Band" represents the spread or range of limits of peel loss about an average figure for such loss or wastage or product during a steam peeling operation. A tight band represents a greater uniformity of result across the peeled products from one product unit to another. For example, if average peel loss is for example 4%, and the band of peel loss is for example 2% to 6% using a conventional peeling installation, under the new system according to the present example, even if the average loss is for example unchanged, use of the example typically brings about a reduced figure for band, for example to the range 2% to 5%, these figures being, as also is the case for all other values previously given above, purely exemplary and not to be regarded as in any way limiting. Even a small improvement (i.e. reduction) in product loss is commercially and economically significant in the context of industrial scale steam peeling. Thus there is achieved by virtue of this example a greater consistency of output and less variation in peel loss from one individual product to another. An increase in batch load may also be achievable, this implying a reduced void space during operation.

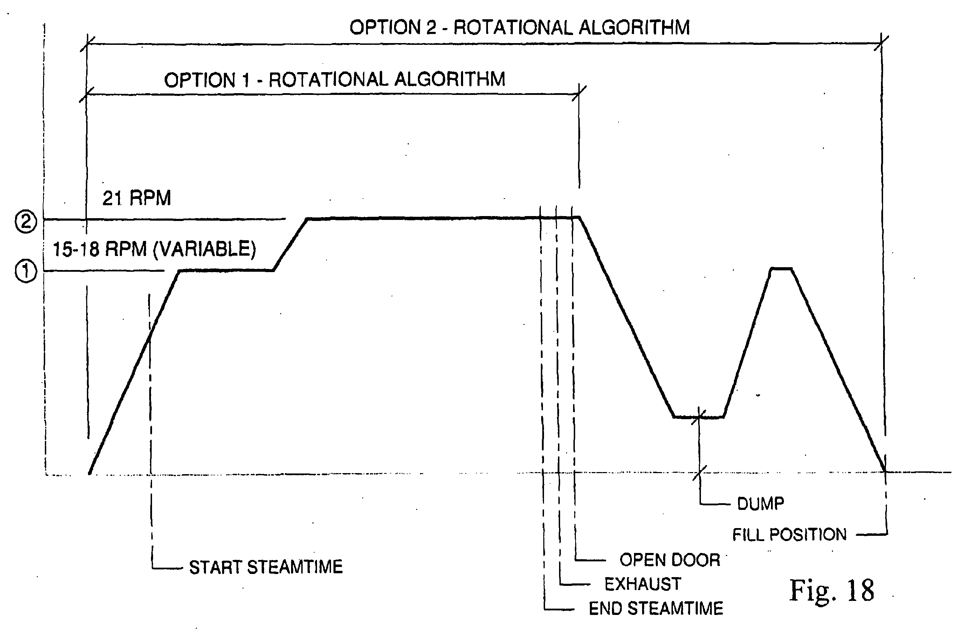

An alternative embodiment of improved rotational programme is shown in the example of Fig. 18 in which the rotational cycle again differs from that of the prior art in that after a period of steady state rotation at, for example, a speed selected from, for example, the range 15-18 rpm, rotation of the drum is speeded up to a higher number of revolutions per minute, for example 21 rpm. The exact choice of speeds for both the initial and higher speed phases or periods of rotation is selected in dependence on inter alia the product to be peeled and the product and peeling requirements. The choice of speed for the higher rpm period may be based not only on the foregoing factors but also on the mechanical capabilities of the plant or system. In certain installations, significantly higher speeds of rotation may be technically achievable, and the limiting speed will then be constrained only by the ability of the product to withstand the demands of such high speed rotation, in addition to the other product properties and requirements already previously discussed. All specific speed values quoted are given by way of example only and do not set any limitations on viable speed options. During the period of higher speed rotation, in the case of this variant as compared with the arrangement of Fig. 17, not only is steaming stopped and exhaust/blowdown effected, but the door is also opened immediately before the period of higher speed rotation is terminated. A ramp-down of rotational speed is then effected, but there is no momentary standstill when the vessel is stationary and there is no reversal of the direction of rotation for the dump phase. It has been found that this arrangement again leads to significant advantageous results in terms of quality of peeling.

This further variant in the improved rotational cycle algorithm as shown in the example of Fig. 18 also provides for a significant extension of the period of steaming rotation, in particular that portion of the steaming period which is effected at higher speed, as compared with the arrangement depicted in Fig. 17, although as indicated in Fig. 17, the duration of the higher speed period of rotation may be selectively variable and may be longer than implied by the diagrammatic representation of the drawings. Again as compared with the arrangement of Fig. 17, there may, under one option (identified as "Option 2") for implementation of the rotational programme of the invention as shown in Fig. 18, be no reversal of the direction of rotation for the dump phase. The termination of steaming, the initiation of exhaust and door opening are all effected in quick succession and at full rotational speed. Under this arrangement, the vessel then slows down to the dump orientation with no reversal of direction and with the door already open. Following dump (i.e. discharge of peeled product), rotation continues to the fill position to commence a new cycle. The rotational programme sequence indicated on Fig. 18 as "Option 2" illustrates this possibility, while "Option 1" for this variant of the rotational programme of the example provides for the algorithm for the steaming period to be followed by reversed rotation for the dump phase, as in the case of Fig. 17. Thus the extended higher speed steam phase rotational possibility of Fig. 18 may be combined either with continued forward rotation through the dump or discharge stage ("Option 2") or with the known arrangement under which a reversal in the direction of rotation is effected for the dump/product discharge operation ("Option 1").

## Claims

1. A method for steam peeling product within a pressure vessel, comprising, during a predefined peeling cycle period, the steps of
a) initiating a steam charging period during which the vessel is charged with steam, and
b) discharging steam from the pressure vessel at the end of the peeling cycle period,
**characterized in that**:
the steam charging action is regulated to achieve, at initiation of said discharge of steam, a target temperature value for an outer surface region of product to be peeled, said target temperature value being indicative of minimum loss of useful and usable product during a peeling operation; wherein the step of regulating the steam charging action comprises admitting steam to the pressure vessel at a first rate of supply for part of the peeling cycle period, and controlling the inflow of steam to the pressure vessel for at least a part of the remainder of the peeling cycle period at a second rate of supply which is reduced compared with the first rate of steam supply, prior to said discharging of steam from the pressure vessel.

2. A method for steam peeling according to Claim 1, wherein said target temperature value for an outer surface region of product to be peeled is derived from at least a temperature value for the steam within the pressure vessel.

3. A method for steam peeling according to Claim 1, wherein said target temperature value for an outer surface region of product to be peeled is derived from at least one of a pressure value and a temperature value for the steam within the pressure vessel.

4. A method for steam peeling according to any of the preceding claims, comprising the additional step of effecting rotation of the pressure vessel for at least part of the peeling cycle period.

5. Apparatus for steam peeling product during a predefined peeling cycle period, the apparatus comprising a pressure vessel (1),
means (12, 13) for charging the pressure vessel (1) with steam,
means (10, 14) for discharge of steam from the pressure vessel (1), and
control means (5) for initiating a steam-charging period during which the vessel (1) is charged with steam and initiating said discharge of steam from the pressure vessel (1) at the end of the peeling cycle period,
**characterized in that**
said control means (5) is adapted to regulate (26, 27; 13; 13a; 22, 23, 24) the steam charging action to achieve, at initiation of said discharge of steam, a target temperature value for an outer surface region of product to be peeled, said target temperature value being indicative of minimum loss of useful and usable product during a peeling operation; wherein said control means (5) is adapted to admit steam (13; 13a) to the pressure vessel (1) at a first rate of supply for part of the peeling cycle period, and to control (26, 27; 23; 13a) the inflow of steam to the pressure vessel (1) for at least a part of the remainder of the peeling cycle period at a second rate of supply which is reduced compared with the first rate of steam supply, prior to said discharge of steam from the pressure vessel.

6. Apparatus for steam peeling according to Claim 5, comprising means (26, 27) for deriving said target temperature value for an outer surface region of product to be peeled from at least a temperature value for the steam within the pressure vessel.

7. Apparatus for steam peeling according to Claim 5, comprising means (26, 27) for deriving said target temperature value for an outer surface region of product to be peeled from at least one of a pressure and a temperature value for the steam within the pressure vessel.

8. Apparatus for steam peeling according to any of Claims 5 to 7, comprising a full-flow steam admission valve (13) and a reduced flow steam admission valve (23).

9. Apparatus for steam peeling according to any of Claims 5 to 8, wherein the pressure vessel (1) is adapted to be driven in rotation during at least part of the peeling cycle period.

10. A computer implemented system for steam peeling product within a pressure vessel during a predefined peeling cycle period, the system comprising:
a) means for initiating a steam charging period during which the vessel is charged with steam, and
b) means for discharging steam from the pressure vessel at the end of the peeling cycle period,
**characterized in that**
means are provided for regulating the steam charging action to achieve, at initiation of said discharge of steam, a target temperature value for an outer surface region of product to be peeled, said target temperature value being indicative of minimum loss of useful and usable product during a peeling operation; wherein the means for regulating the steam charging action are adapted to admit steam to the pressure vessel at a first rate of supply for part of the peeling cycle period, and control the inflow of steam to the pressure vessel for at least a part of the remainder of the peeling cycle period at a second rate of supply which is reduced compared with the first rate of steam supply, prior to said discharging of steam from the pressure vessel.

11. Apparatus for steam peeling according to claim 5, wherein pressure within the pressure vessel is controlled by an on/off steam supply valve.

## Patentansprüche

1. Verfahren zum Dampfschälen von Erzeugnissen innerhalb eines Druckbehälters, mit den folgenden Schritten innerhalb einer vordefinierten Schälzyklus-Periode:
a) Initiieren einer Dampfladeperiode, während derer der Behälter mit Dampf geladen wird, und
b) Entladen von Dampf aus dem Druckbehälter am Ende der Schälzyklus-Periode,
**dadurch gekennzeichnet, dass**:
der Dampfladevorgang derart geregelt wird, dass bei der Initiierung des Entladens von Dampf ein Ziel-Temperaturwert für einen Außenflächenbereich des zu schälenden Erzeugnisses erzielt wird, wobei der Ziel-Temperaturwert auf einen minimalen Verlust nützlichen und verwendbaren Erzeugnisses während einer Schäloperation hindeutet; wobei der Schritt des Regelns der Dampfladeaktion das während eines Teils der Schälzyklus-Periode erfolgende Einlassen von Dampf in den Druckbehälter mit einer ersten Zuführrate und das während mindestens eines Teils des Rests der Schälzyklus-Periode erfolgende Steuern des Einströmens von Dampf in den Druckbehälter mit einer gegenüber der ersten Dampfzuführrate reduzierten zweiten Zuführrate, bevor das Entladen von Dampf aus dem Druckbehälter erfolgt.

2. Verfahren zum Dampfschälen nach Anspruch 1, bei dem der Ziel-Temperaturwert für einen Außenflächenbereich des zu schälenden Erzeugnisses aus mindestens einem Temperaturwert für den Dampf innerhalb des Druckbehälters abgeleitet wird.

3. Verfahren zum Dampfschälen nach Anspruch 1, bei dem der Ziel-Temperaturwert für einen Außenflächenbereich des zu schälenden Erzeugnisses aus mindestens einem Druckwert und einem Temperaturwert für den Dampf innerhalb des Druckbehälters abgeleitet wird.

4. Verfahren zum Dampfschälen nach einem der vorhergehenden Ansprüche, mit dem zusätzlichen Schritt des Veranlassens des Drehens des Druckbehälters während mindestens eines Teils der Schälzyklus-Periode.

5. Vorrichtung zum Dampfschälen von Erzeugnissen während einer vordefinierten Schälzyklus-Periode, wobei die Vorrichtung aufweist:
einen Druckbehälter (1),
einer Vorrichtung (12,13) zum Laden des Druckbehälters (1) mit Dampf,
einer Vorrichtung (10,14) zum Entladen von Dampf aus dem Druckbehälter (1), und
eine Steuervorrichtung (5) zum Initiieren einer Dampfladeperiode, während derer der Behälter (1) mit Dampf geladen wird, und zum Initiieren des Entladens von Dampf aus dem Druckbehälter (1) am Ende der Schälzyklus-Periode,
**dadurch gekennzeichnet, dass**
die Steuervorrichtung (5) ausgelegt ist zum Regeln (26,27;13,;13a; 22,23,24) der Dampfladeaktion derart, dass bei der Initiierung des Entladens von Dampf ein Ziel-Temperaturwert für einen Außenflächenbereich des zu schälenden Erzeugnisses erzielt wird, wobei der Ziel-Temperaturwert auf einen minimalen Verlust nützlichen und verwendbaren Erzeugnisses während einer Schäloperation hindeutet; wobei die Steuervorrichtung (5) derart ausgelegt ist, dass während eines Teils der Schälzyklus-Periode Dampf (13;13a) in den Druckbehälter (1) mit einer ersten Zuführrate eingelassen wird, und dass das Einströmen von Dampf in den Druckbehälter (1) während mindestens eines Teils des Rests der Schälzyklus-Periode mit einer gegenüber der ersten Dampfzuführrate reduzierten zweiten Zuführrate gesteuert wird (26,27;23; 13a), bevor das Entladen von Dampf aus dem Druckbehälter erfolgt.

6. Vorrichtung zum Dampfschälen nach Anspruch 5, mit Vorrichtungen (26,27) zum Ableiten des Ziel-Temperaturwerts für einen Außenflächenbereich des zu schälenden Erzeugnisses aus mindestens einem Temperaturwert für den Dampf innerhalb des Druckbehälters.

7. Vorrichtung zum Dampfschälen nach Anspruch 5, mit Vorrichtungen (26,27) zum Ableiten des Ziel-Temperaturwerts für einen Außenflächenbereich des zu schälenden Erzeugnisses aus mindestens einem Druck- und einem Temperaturwert für den Dampf innerhalb des Druckbehälters.

8. Vorrichtung zum Dampfschälen nach einem der Ansprüche 5 bis 7, mit einem Vollstrom-Dampfeinlassventil (13) und einem für reduzierten Strom ausgelegten Dampfeinlassventil (23).

9. Vorrichtung zum Dampfschälen nach einem der Ansprüche 5 bis 8, bei der Druckbehälter (1) während mindestens eines Teils der Schälzyklus-Periode drehend antreibbar ist.

10. Computerimplementiertes System zum Dampfschälen von Erzeugnissen innerhalb eines Druckbehälters während einer vordefinierten Schälzyklus-Periode, wobei das System aufweist:
a) einer Vorrichtung zum Initiieren einer Dampfladeperiode, während derer der Behälter mit Dampf geladen wird, und
b) einer Vorrichtung zum Entladen von Dampf aus dem Druckbehälter am Ende der Schälzyklus-Periode,
**dadurch gekennzeichnet, dass**
Vorrichtungen zum derartigen Regeln der Dampfladeaktion vorgesehen sind, dass bei der Initiierung des Entladens von Dampf ein Ziel-Temperaturwert für einen Außenflächenbereich des zu schälenden Erzeugnisses erzielt wird, wobei der Ziel-Temperaturwert auf einen minimalen Verlust nützlichen und verwendbaren Erzeugnisses während einer Schäloperation hindeutet; wobei die Vorrichtung zum Regeln des Dampfladevorgangs derart ausgelegt ist, dass während eines Teils der Schälzyklus-Periode Dampf in den Druckbehälter mit einer ersten Zuführrate eingelassen wird, und dass das Einströmen von Dampf in den Druckbehälter während mindestens eines Teils des Rests der Schälzyklus-Periode mit einer gegenüber der ersten Dampfzuführrate reduzierten zweiten Zuführrate gesteuert wird, bevor das Entladen von Dampf aus dem Druckbehälter erfolgt.

11. Vorrichtung zum Dampfschälen nach Anspruch 5, bei der der Druck innerhalb des Druckbehälters mittels eines Einschalt-Dampfzuführventils gesteuert wird.

## Revendications

1. Procédé d'épluchage à la vapeur d'un produit à l'intérieur d'un récipient sous pression comprenant, pendant une durée de cycle d'épluchage prédéfinie, les étapes consistant à :
a) démarrer une période de chargement de vapeur pendant laquelle le récipient est chargé en vapeur, et
b) évacuer la vapeur du récipient sous pression à la fin de la durée de cycle d'épluchage,
**caractérisé en ce que** :
l' action de chargement de vapeur est régulée pour obtenir, au démarrage de ladite évacuation de vapeur, une valeur de température cible pour une région de surface externe du produit devant être épluché, ladite valeur de température cible étant indicative d'une perte minimale de produit utile et utilisable pendant une opération d'épluchage ; dans lequel l'étape de régulation de l'action de chargement de vapeur comprend l'admission de vapeur dans le récipient sous pression à une première vitesse d'alimentation pendant une partie de la durée de cycle d'épluchage, et le contrôle de l'arrivée de vapeur dans le récipient sous pression pendant au moins une partie du reste de la durée de cycle d'épluchage à une seconde vitesse d'alimentation, qui est réduite par rapport à la première vitesse d'alimentation en vapeur, avant ladite évacuation de vapeur du récipient sous pression.

2. Procédé d'épluchage à la vapeur selon la revendication 1, dans lequel ladite valeur de température cible pour une région de surface externe du produit devant être épluché est déduite d'au moins une valeur de température pour la vapeur à l'intérieur du récipient sous pression.

3. Procédé d'épluchage à la vapeur selon la revendication 1, dans lequel ladite valeur de température cible pour une région de surface externe du produit devant être épluché est déduite d'au moins une d'une valeur de pression et d'une valeur de température pour la vapeur à l'intérieur du récipient sous pression.

4. Procédé d'épluchage à la vapeur selon l'une quelconque des revendications précédentes, comprenant l'étape supplémentaire consistant à faire tourner le récipient sous pression pendant au moins une partie de la durée de cycle d'épluchage.

5. Appareil d'épluchage à la vapeur d'un produit pendant une durée de cycle d'épluchage prédéfinie, l'appareil comprenant un récipient sous pression (1),
des moyens (12, 13) pour charger le récipient sous pression (1) en vapeur,
des moyens (10, 14) pour évacuer la vapeur du récipient sous pression (1), et
des moyens de commande (5) pour démarrer une période de chargement de vapeur pendant laquelle le récipient (1) est chargé en vapeur et démarrer ladite évacuation de vapeur du récipient sous pression (1) à la fin de la durée de cycle d'épluchage,
**caractérisé en ce que**
lesdits moyens de commande (5) sont conçus pour réguler (26, 27 ; 13 ; 13a ; 22, 23, 24) l'action de chargement de vapeur pour obtenir, au démarrage de ladite évacuation de vapeur, une valeur de température cible pour une région de surface externe du produit devant être épluché, ladite valeur de température cible étant indicative d'une perte minimale de produit utile et utilisable pendant une opération d'épluchage ; dans lequel lesdits moyens de commande (5) sont conçus pour admettre la vapeur (13 ; 13a) dans le récipient sous pression (1) à une première vitesse d'alimentation pendant une partie de la durée de cycle d'épluchage, et pour contrôler (26, 27 ; 23 ; 13a) l'arrivée de vapeur dans le récipient sous pression (1) pendant au moins une partie du reste de la durée de cycle d'épluchage à une seconde vitesse d' alimentation qui est réduite par rapport à la première vitesse d'alimentation en vapeur, avant ladite évacuation de vapeur du récipient sous pression.

6. Appareil d'épluchage à la vapeur selon la revendication 5, comprenant des moyens (26, 27) pour déduire ladite valeur de température cible pour une région de surface externe du produit devant être épluché à partir d'au moins une valeur de température pour la vapeur à l'intérieur du récipient sous pression.

7. Appareil d'épluchage à la vapeur selon la revendication 5, comprenant des moyens (26, 27) pour déduire ladite valeur de température cible pour une région de surface externe du produit devant être épluché à partir d'au moins une valeur de pression et de température pour la vapeur à l'intérieur du récipient sous pression.

8. Appareil d'épluchage à la vapeur selon l'une quelconque des revendications 5 à 7, comprenant une valve d'admission de vapeur à plein débit (13) et une valve d'admission de vapeur à débit réduit (23).

9. Appareil d'épluchage à la vapeur selon l'une quelconque des revendications 5 à 8, dans lequel le récipient sous pression (1) est conçu pour être entraîné en rotation pendant au moins une partie de la durée de cycle d'épluchage.

10. Système mis en oeuvre par ordinateur pour éplucher à la vapeur un produit à l'intérieur d'un récipient sous pression pendant une durée de cycle d'épluchage prédéfinie, le système comprenant :
a) des moyens pour démarrer une période de chargement de vapeur pendant laquelle le récipient est chargé en vapeur, et
b) des moyens pour évacuer la vapeur du récipient sous pression à la fin de la durée de cycle d'épluchage,
**caractérisé en ce que**
des moyens sont prévus pour réguler l'action de chargement de vapeur pour obtenir, au démarrage de ladite évacuation de vapeur, une valeur de température cible pour une région de surface externe du produit devant être épluché, ladite valeur de température cible étant indicative d'une perte minimale de produit utile et utilisable pendant une opération d'épluchage ; dans lequel les moyens de régulation de l'action de chargement de vapeur sont conçus pour admettre la vapeur dans le récipient sous pression à une première vitesse d'alimentation pendant une partie de la durée de cycle d' épluchage, et contrôler l' arrivée de vapeur dans le récipient sous pression pendant au moins une partie du reste de la durée de cycle d'épluchage à une seconde vitesse d'alimentation qui est réduite par rapport à la première vitesse d'alimentation en vapeur, avant ladite évacuation de vapeur du récipient sous pression.

11. Appareil d'épluchage à la vapeur selon la revendication 5, dans lequel la pression dans le récipient sous pression (1) est contrôlée par une valve d'alimentation en vapeur de type tout ou rien.
